# EUROPEAN PATENT APPLICATION

(11) **EP 4 811 904 A1**
(43) Date of publication of application: **23.09.2026**
(21) Application number: 24892763.4
(22) Date of filing: 18.06.2024
(51) Int. Cl.: H04W 72/20

(54) **SIGNAL TRANSMISSION METHOD AND APPARATUS, AND STORAGE MEDIUM**

(30) Priority: 24.11.2023 CN 202311594045
(71) Applicant: ZTE Corporation, Shenzhen, Guangdong 518057 (CN)
(72) Inventor: GOU, Wei, Shenzhen, Guangdong 518057 (CN); HAN, Xianghui, Shenzhen, Guangdong 518057 (CN); WEI, Xingguang, Shenzhen, Guangdong 518057 (CN); KOU, Shuaihua, Shenzhen, Guangdong 518057 (CN); REN, Min, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099785
(87) International publication number: WO 2025/107598

(57) **Abstract**

Provided are a signal transmission method and apparatus, and a storage medium. The method comprises: a first node sends first information to a second node, wherein the first information is used for determining the symbol attribute corresponding to a symbol.

## Description

The present disclosure claims priority to Chinese Patent Application No. 202311594045.1, and filed on November 24, 2023, the entire content of which is incorporated into the present application by reference.

### TECHNICAL FIELD

The present disclosure relates to the field of communication technologies, and in particular, to a signal transmission method, an apparatus, and a storage medium.

### BACKGROUND

In order to improve uplink (UL) coverage, UL latency, and UL capacity of time division duplexing (TDD) systems, a sub band full duplex (SBFD) technology was proposed. The sub band full duplex is a new type of duplex technology that may partition out an uplink subband and a downlink (DL) subband within a frequency band of a carrier, enabling a base station to have an uplink resource and a downlink resource simultaneously in more time slots, and thereby achieving a latency advantage in a TDD system that approximates that of a frequency division duplexing (FDD) system.

### SUMMARY

In an aspect, a signal transmission method is provided. The signal transmission method, includes:
sending, by a first node, first information to a second node, where the first information is used to determine a symbol attribute corresponding to a symbol.

In another aspect, a signal transmission method is provided. The signal transmission method, includes:
receiving, by a second node, first information from a first node, where the first information is used to determine a symbol attribute corresponding to a symbol.

In yet another aspect, a signal transmission apparatus is provided. The signal transmission apparatus includes a communication module,
the communication module is configured to send first information to a second node, where the first information is used to determine a symbol attribute corresponding to a symbol.

In yet another aspect, a signal transmission apparatus is provided. The signal transmission apparatus includes a communication module,
the communication module is configured to receive first information from a first node, where the first information is used to determine a symbol attribute corresponding to a symbol.

In yet another aspect, a communication apparatus is provided. The communication apparatus includes: a memory and a processor; the memory is coupled to the processor; the memory is configured to store computer program instructions executable by the processor; and the processor, upon executing the computer program instructions, implements the signal transmission method described in any one of the above aspects.

In yet another aspect, a computer-readable storage medium is provided. The computer readable storage medium has stored computer program instructions thereon, and the computer program instructions, upon being executed on a computer (e.g., a communication apparatus or a signal transmission apparatus), implement the signal transmission method described in any one of the above aspects.

In yet another aspect, a computer program product is provided. The computer program product includes computer program instructions, and the computer program instructions, upon being executed by a processor, implement the signal transmission method described in any one of the above aspects.

### BRIEF DESCRIPTION OF THE DRAWINGS

FIG. 1 is a time-frequency resource diagram in accordance with some embodiments of the present disclosure.
FIG. 2 is another time-frequency resource diagram in accordance with some embodiments of the present disclosure.
FIG. 3 is yet another time-frequency resource diagram in accordance with some embodiments of the present disclosure.
FIG. 4 is yet another time-frequency resource diagram in accordance with some embodiments of the present disclosure.
FIG. 5 is a schematic diagram of an architecture of a communication system in accordance with some embodiments of the present disclosure.
FIG. 6 is a flow diagram of a signal transmission method in accordance with some embodiments of the present disclosure.
FIG. 7 is a schematic diagram of a signal transmission apparatus in accordance with some embodiments of the present disclosure.
FIG. 8 is a schematic diagram of another signal transmission apparatus in accordance with some embodiments of the present disclosure.
FIG. 9 is a structural schematic diagram of a communication apparatus in accordance with some embodiments of the present disclosure.

### DETAILED DESCRIPTION

To enable those skilled in the art to better understand the technical solutions of the embodiments of the present disclosure, the technical solutions in the embodiments of the present disclosure will be described clearly and completely below in conjunction with the drawings in the embodiments of the present disclosure. However, the described embodiments are only a part of the embodiments of the present disclosure, not all of the embodiments. All other embodiments obtained based on the embodiments of the present disclosure by a person of ordinary skill in the art without paying any creative effort shall belong to the protection scope of the present disclosure.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent three cases: only A, only B, and both A and B. In addition, "at least one" means one or more, and "multiple/plurality of" means two or more. Expressions, such as "first" and "second", etc., do not limit the number and execution order, and the expressions, such as "first" and "second", etc., also do not necessarily limit different items.

It should be noted that in the present disclosure, the wordings such as "exemplary/exemplarily" or "for example (e.g.)", etc., are used to present an example, illustration, or explanation. Any embodiment or design scheme described with "exemplary/exemplarily" or "for example" in the present disclosure should not be construed as preferred or advantageous over other embodiments or design schemes. Rather, the usage of wordings such as "exemplarily" or "for example" is intended to present related concepts in a concrete manner.

In order to improve UL coverage, UL latency, and UL capacity of a TDD system, the sub band full duplex technology was proposed. Within DL symbols/slots, an UL subband and a DL subband are configured, for example, the UL subband and the DL subband are configured within a frequency domain range of a DL bandwidth part (BWP) and an UL BWP. The UL subband and the DL subband are also referred to as SBFD subbands. That is, an SBFD subband is configured in a DL symbols/slot. The SBFD subband generally includes a DL subband and an UL subband.

For example, in a 100MHz TDD carrier, 20 consecutive RBs are configured as UL subbands in the DL BWP within the DL symbols/slot, and a remaining frequency domain resource of the DL BWP is a DL subband (a gap of frequency domain between the UL subband and the DL subband may be left unconfigured), or a DL subband in the DL BWP may also be configured within the DL symbols/slot. In this way, within the DL symbols/slot, the UL subband can be used for UL transmission, and the DL subband can be used for DL transmission.

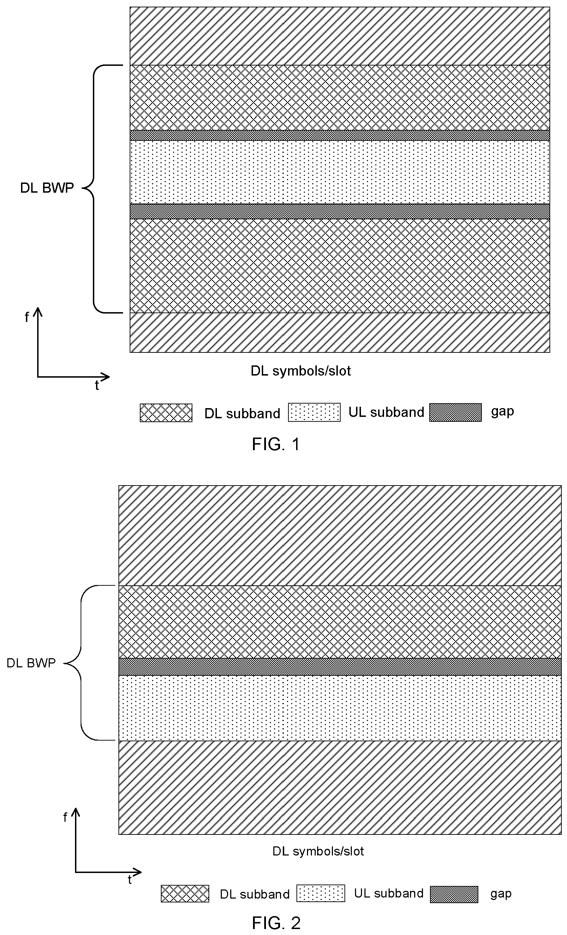

For example, as shown in FIG. 1, a UL subband and a DL subband are configured in the DL symbols/slot. This structure is generally referred to as "DUD" (frequency domain-based structure).

As another example, as shown in FIG. 2, a UL subband and a DL subband are configured in the DL symbols/slots. This structure is generally referred to as "DU"/"UD" (frequency domain-based structure).

A symbol configured with an SBFD subband may be referred to as an SBFD symbol. A slot containing the SBFD symbol may be referred to as an SBFD slot. A symbol that is not configured with an SBFD subband may be referred to as a non-SBFD symbol (i.e., a regular uplink DL, downlink UL, or flexible F symbol). A slot that does not contain the SBFD symbol may be referred to as a non-SBFD slot.

For a terminal device (e.g., User Equipment (UE)) of an old version or UEs that are not configured with SBFD subbands, these UEs will not be aware of an existence of SBFD subbands (including the DL subband and the UL subband). For this type of UE, if a DL transmission is configured or scheduled in an SBFD symbol, how that DL transmission is executed is an issue to be addressed, especially when the resources of the DL transmission include some or all of the resources in the UL subband, that is, a resource of the DL transmission overlaps with the UL subband (including time domain and/or frequency domain).

To further improve system efficiency and spectral efficiency, the present disclosure proposes a co-frequency co-time full duplex (CCFD) technology.

The CCFD technology uses a same time and frequency to transmit wireless signals and receive wireless signals simultaneously, thus doubling the spectral efficiency of wireless communication links.

CCFD resource configuration: in a carrier, a base station configures a RB set in frequency domain based on consecutive RBs for CCFD operation, and configures some slots or symbols in time domain based on the symbols or slots for CCFD operation. In this way, some time-frequency resources (denoted as resource A) used for CCFD operation may be obtained. The resource A, also referred to as a CCFD subband, can be used for DL transmission and UL reception. At least from a base station side, the resource A can be used for co-frequency co-time full duplex transmission. That is, the base station can use the same time and the same frequency to send DL signals and receive UL signals simultaneously in the resource A. A UE side may only support time-division DL transmission and UL transmission.

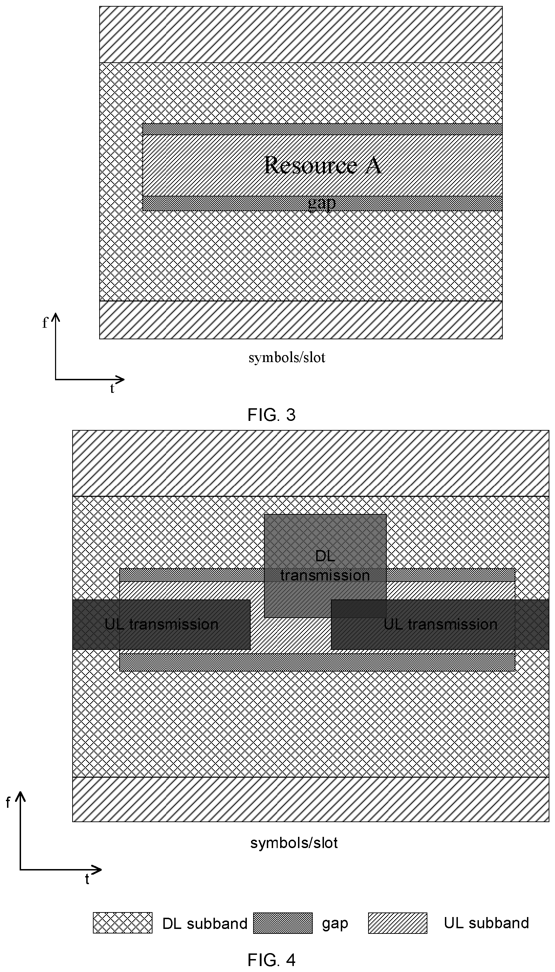

For example, as shown in FIG. 3, a symbol/slot configured with resource A is referred to as a CCFD symbol/slot, and a symbol/slot that is not configured with resource A is referred to as a non-CCFD symbol/slot (e.g., a regular DL, UL, or F symbol/slot).

For a UE of an old version, or UEs that are not configured with CCFD subbands, these UEs will not be aware of the existence of the CCFD subbands. For this type of UE, if a DL transmission is configured or scheduled in a CCFD symbol, how the DL transmission is executed is an issue to be addressed, especially when the resources of the DL transmission include some or all of the resources in the CCFD subband, that is, a resource of the DL transmission overlaps with the CCFD subband (including time domain and/or frequency domain).

At present, for UEs configured with SBFD subbands, in related arts, the DL transmission of the UE cannot be scheduled or configured in the UL subband of the SBFD symbol. In other words, if the resource for the DL transmission of the UE overlaps with the UL subband, the UE considers the overlapping resource to be invalid for the DL transmission, that is, the DL transmission cannot use the overlapping resource. In other words, DL transmission cannot use the resource of UL subband to perform transmission. However, this limitation will reduce system efficiency or increase a complexity of base station scheduling.

Furthermore, in practice, there are situations where the resource for DL transmission scheduled by the base station contain the resource for UL subband, that is, the resource for DL transmission overlaps with the UL subband. For example, the DL transmission has a higher priority, or the DL transmission corresponds to a low-latency service type (e.g., Ultra-reliable and Low Latency Communication (URLLC)).

For example, as shown in FIG. 4, the base station schedules/configures a DL transmission (the DL transmission including DG (Dynamic Grant) PDSCH, SPS (Semi-Persistent Scheduling) PDSCH, PDCCH, downlink reference signal, etc.) for the UE in the SBFD symbol. The resource of the DL transmission overlaps with the resource of the UL subband, and the DL transmission is a DL transmission with higher priority. The base station schedules/configures UL transmission within the UL subband, but some resources of the UL transmission are outside the time domain of the UL subband. In this case, a conflict arises between a transmission direction supported by the transmission resource and a transmission direction of a signal to be transmitted. How the base station and the UE determine whether to perform DL transmission or UL transmission is a technical problem to be solved.

In view of this, the present disclosure provides a signal transmission method, the method includes: sending, by a first node, first information to a second node, where the first information is used to determine a symbol attribute corresponding to a symbol, so as to solve a problem of conflicting between the transmission direction supported by the transmission resource on the symbol and the transmission direction of the signal to be transmitted, thereby enabling the first node and the second node to determine whether to perform DL transmission or UL transmission.

It can be understood that, the technical solutions provided in the present disclosure are applicable not only to transmission/reception based on SBFD subbands, but also are applicable to transmission/reception based on CCFD subbands, for example, by replacing the SBFD symbol/slot with the CCFD symbol/slot, and by replacing the non-SBFD symbol/slot with the non-CCFD symbol/slot. Since the CCFD subband supports both DL transmission and UL transmission, replacing the UL subband or the DL subband with the CCFD subband may also be possible.

The information transmission method provided in the embodiments of the present disclosure may be applied to systems in various communication standards. For example, the information transmission method provided in the embodiments of the present disclosure may be applicable to systems, including but not limited to, a long term evolution (LTE) system, various versions based on LTE advanced, a fifth generation (5G) system, or other communication systems. In addition, the information transmission method provided in the embodiments of the present disclosure may also be applicable to future-oriented communication systems (e.g., a 6G communication system).

A network architecture of a mobile communication network (including but not limited to 3G, 4G, 5G and future mobile communication networks) in the embodiments of the present disclosure may at least include a first communication node and a second communication node. It should be understood that, in the present example, the first communication node is a network-side device (e.g., including but not limited to a base station), and the second communication node may be a terminal-side device (e.g., including but not limited to a terminal). The first communication node and the second communication node may be referred to as a first node and a second node for short, respectively.

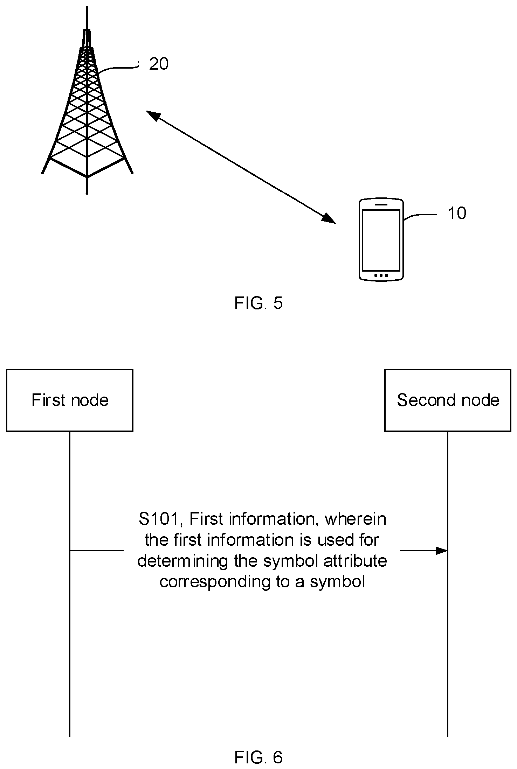

For example, taking an example in which the first communication node is a base station and the second communication node is a terminal, as shown in FIG. 5, the embodiments of the present disclosure provide a communication system, the communication system includes a terminal 10 and a base station 20. Numbers of terminals 10 and base stations 20 may be one or more, and the numbers are not limited herein.

In some embodiments, the base station 20 provides wireless access service to the terminal 10. A base station 20 provides at least one service coverage area (also referred to as a cell). Terminal 10 entering the area may communicate with the base station 20 via a wireless signal to receive a wireless access service provided by the base station 20.

In some embodiments, the base station may be a base station in long term evolution (LTE), long term evolution advanced (LTEA), or an evolutional Node B(eNB or eNodeB), a base station device in a 5G network, or a base station in a future communication system. The base station may include various network-side devices such as macro base stations, micro base stations, home base stations, wireless remote extensions, reconfigurable intelligent surfaces (RISs), routers, relays, TRPs, and wireless fidelity (WIFI) devices.

In some embodiments, the terminal may be a device with wireless transceiving functions. The terminal may be a mobile phone, a pad, a computer with wireless transceiving functions, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal, sometimes, may also be referred to as a user, a user equipment (UE), an access terminal, a UE unit, a UE station, a mobile station, a mobile platform, a remote station, a remote terminal, a mobile device, a UE terminal, a wireless communication device, a UE agent, a UE apparatus, etc., and the embodiments of the present disclosure does not limited thereto.

It should be noted that, FIG. 5 is only an exemplary framework diagram, and a number of devices and names of the various devices included in FIG. 5 are not limited, and in addition to the devices shown in FIG. 5, the communication system may further include other devices, such as a core network device.

The embodiments of the present disclosure do not limit the application scenarios. The system architecture and service scenarios described in the embodiments of the present disclosure are intended to provide a clear explanation of the technical solution of the present disclosure and do not constitute a limitation on the technical solution provided in the embodiments of the present disclosure, and people of ordinary skill in the art may know that, with the evolution of the network architectures and the emergence of new service scenarios, the technical solutions provided in the embodiments of the present disclosure are also applicable to similar technical problems.

The embodiments of the present disclosure provide a signal transmission method. As shown in FIG. 6, the method at least includes S101.

In S101, a first node sends first information to a second node; correspondingly, the second node receives the first information from the first node. The first information is used to determine a symbol attribute corresponding to a symbol.

In some embodiments, the first node or the second node performs reception or transmission of a signal to be transmitted on a first transmission resource containing the symbol, based on the symbol attribute corresponding to the symbol determined by the first information, where the first transmission resource overlaps with a transmission resource of the signal to be transmitted between the first node and the second node, and a transmission direction supported by the first transmission resource conflicts with a transmission direction of the signal to be transmitted.The transmission resource for the signal to be transmitted may be either an uplink transmission resource or a downlink transmission resource.

In some embodiments, the first node or the second node performs the reception or transmission of a signal to be transmitted based on the symbol attribute corresponding to the symbol determined by the first information, where the transmission direction of the signal to be transmitted does not conflict with the symbol attribute corresponding to the symbol determined by the first information. In other words, the first node configures the first information to determine the symbol attributes of some symbols, and schedules or configures the signal to be transmitted in the symbol whose symbol attributes have been determined. In this case, the transmission direction (uplink or downlink) of the signal to be transmitted should not conflict with the symbol attribute of the symbol where the signal is located.

For example, the first node configures the first information to determine that the symbol attributes of some symbols are DL symbols (e.g., changing from SBFD symbols to DL symbols, that is, canceling the SBFD subbands (including DL subbands and UL subbands) in these SBFD symbols, and these symbols return to normal DL symbols). The first node can schedule signals to be transmitted with a downlink transmission direction in these symbols, including using original frequency domain resources configured with UL subbands in these symbols. Obviously, the first node cannot schedule signals to be transmitted with an uplink transmission direction in these symbols, including using the original frequency domain resources configured with UL subbands in these symbols, because the redefined symbol attributes of these symbols conflict with the transmission direction of the signals to be transmitted with the uplink transmission direction.

For another example, the first node configures the first information to determine that symbol attributes of some symbols are F symbols (e.g., changing from SBFD symbol to F symbol, that is, canceling the SBFD subbands (including DL subbands and UL subbands) in these SBFD symbols, and these symbols return to normal F symbols). The first node can schedule signals to be transmitted with the downlink transmission direction in these symbols, including using the original frequency domain resources configured with UL subbands in these symbols. Obviously, the first node can also schedule signals to be transmitted with the uplink transmission direction in these symbols, including using the original frequency domain resources configured with UL subbands in these symbols. This is because the F symbols can support both UL transmission and DL transmission, so the symbol attributes of these symbols do not conflict with the transmission direction of the signal to be transmitted. Correspondingly, the second node receives the first information, determines the symbol attributes of these symbols according to the first information, and performs transmission of the signal to be transmitted based on the symbol attributes of these symbols (after modification). For example, the signal to be transmitted is executed if the transmission direction of the signal to be transmitted does not conflict with the redefined symbol attributes of these symbols.

In some embodiments, the signal to be transmitted on the symbol for receiving or transmitting includes at least one of:
physical downlink control channel (PDCCH);
physical downlink shared channel (PDSCH);
synchronization signal and physical broadcast channel (PBCH) block (SSB);
physical random access channel (PRACH);
physical uplink control channel (PUCCH);
downlink reference signal;
physical uplink shared channel (PUSCH); or
uplink reference signal.

It can be understood that, the signals to be transmitted that are used by the symbol for receiving or transmitting include not only the signals listed above, but also include other types of signals, and the present disclosure does not limited thereto.

In some embodiments, the symbol attribute of the symbol include a first type symbol (denoted as SBFD symbol) and a second type symbol (denoted as non-SBFD symbol); the first type symbol is a symbol configured with a sub band full duplex, and the second type symbol is a symbol that is not configured with the sub band full duplex; the first type symbol includes at least one of: a first type downlink symbol or a first type flexible symbol; the second type symbol includes at least one of: a second type downlink symbol or a second type flexible symbol.

In some embodiments, in a case where the transmission direction of the signal to be transmitted is an uplink direction, the first transmission resource includes at least one of: a downlink subband on a first type symbol; a guard interval on the first type symbol; or a second type symbol.

For example, continuing to refer to FIG. 4, the transmission direction of the signal to be transmitted between the base station and the terminal is the uplink direction, that is, UL transmission (the UL transmission includes PRACH transmission and also includes PRACH transmission triggered by PDCCH instruction (order). The UL transmission is scheduled or configured in the UL subband of the SBFD symbol, and the downlink control information (DCI) corresponding to the UL transmission in the PDCCH is scrambled by cell-radio network temporary identifier (C-RNTI), configured scheduling (CS)-RNTI, temporary cell (TC)-RNTI, modulcation and coding scheme (MCS)-C-RNTI, configured grant-small data transmission (CG-SDT)-CS-RNTI, or random access (RA)-RNTI. In addition, within a corresponding SBFD slot, some resources of the UL transmission exceed a time domain range of the UL subband. That is, some resources of the UL transmission overlap with the downlink subband/guard interval in the SBFD symbol, and a UL transmission direction conflicts with a transmission direction supported by the downlink subband/guard interval in the SBFD symbol.

In some embodiments, in a case where the transmission direction of the signal to be transmitted is the downlink direction, the first transmission resource includes at least one of:
an uplink subband on a first type symbol; or
a guard interval on the first type symbol.

For example, continuing to refer to FIG. 4, the signal to be transmitted between the base station and the terminal is a PDSCH, and the PDSCH is scheduled/activated by the DCI in the PDCCH, and the DCI is scrambled by C-RNTI, MCS-C-RNTI, CS-RNTI, G-RNTI, G-CS (Group Configured Scheduling)-RNTI or MCCH (Multibroadcast Control Channel)-RNTI. The first transmission resource is an uplink subband on the symbol configured with the sub band full duplex; the transmission resource of the PDSCH overlaps with the resource of the uplink subband on the symbol configured with the sub band full duplex (including overlapping in time domain and/or frequency domain), and a transmission direction of the PDSCH conflicts with a transmission direction supported by the uplink subband on the symbol configured with the sub band full duplex.

In some embodiments, the first information is used to determine the symbol attribute corresponding to the symbol, includes any one of:
determining a symbol attribute of a specific symbol;
determining that a symbol attribute of a specific symbol have changed;
determining that a specific first type symbol is modified to a second type symbol; or
determining to add or remove k first type symbols, where k is a positive integer.

In some embodiments, the determining to add or remove k first type symbols, includes at least one of:
determining to add k first type symbols starting from an ending of existing first type symbols backward;
determining to add k first type symbols starting from a beginning of the existing first type symbols forward;
determining to remove k first type symbols starting from the ending of the existing first type symbols forward; or
determining to remove k first type symbols starting from the beginning of the existing first type symbols backward.

In some embodiments, the first information includes at least one of the following parameters: a first parameter, a second parameter, a third parameter, a fourth parameter, a fifth parameter, a sixth parameter, or a seventh parameter. Where the first parameter is used to determine a time slot, a TDD frame structure period, or a symbol configuration period of a sub band full duplex; the second parameter is used to determine a position of a specific symbol; the third parameter is used to determine a symbol attribute of a specific symbol; the fourth parameter is used to indicate a number of first type symbols added; the fifth parameter is used to indicate an addition manner; the sixth parameter is used to indicate a number of first type symbols removed; or the seventh parameter is used to indicate a reduction manner.

In some embodiments, a validity of the determined symbol attribute satisfies any of:
the validity of the determined symbol attribute persists until the validity of the symbol attribute is indicated to change again;
the determined symbol attribute is only valid for a current instruction;
the determined symbol attribute is valid within a current TDD frame period;
the determined symbol attribute is valid within a current first type symbol configuration period; or
the determined symbol attribute remains valid for a validity duration further indicated by the first information.

In some embodiments, the determining the symbol attribute corresponding to the symbol, includes at least one of: modifying a first type symbol to a second type symbol; or modifying the second type symbol to the first type symbol. In this way, a conflict between the transmission direction supported by the transmission resource and the transmission direction of the signal to be transmitted may be avoided.

For example, if the DL transmission transmitted by the base station is in the resource where the DL transmission is scheduled or configured, but the resource of the DL transmission overlap with the UL subband, then before transmitting the DL transmission, the base station modifies the SBFD symbol in the symbol where the DL transmission is located to a DL symbol that is not configured with a sub band full duplex, thereby completing the DL transmission. In this way, the resource of the DL transmission will no longer overlaps with the UL subband, because the SBFD symbol where the overlapping resource is located has been modified to the DL symbol that is not configured with the sub band full duplex. The modified symbol should include the SBFD symbol where the resource of the DL transmission is located.

For another example, if the base station wants to transmit the aforementioned UL transmission in the resource that the UL transmission is scheduled or configured, but the resource of the UL transmission overlaps with a DL symbol that is not configured with the SBFD subband, then before transmitting the UL transmission, the base station modifies the DL symbol that is not configured with the SBFD subband to the DL symbol that is configured with the SBFD subband (i.e., SBFD symbol), thereby ensuring that the resource of the UL transmission fall into the UL subband of the SBFD symbol. In this way, the UL transmission can be executed in the corresponding resource. The modified symbol should include a symbol where the resource of the UL transmission is located.

In some embodiments, the modifying the first type symbol to the second type symbol is subject to at least one of the following constraint conditions:
a first type downlink symbol is only permitted to be modified to a second type downlink symbol;
a first type flexible symbol is only permitted to be modified to the second type downlink symbol, or, the first type flexible symbol is only permitted to be modified to a second type flexible symbol;
second type symbols obtained by modification within a same time slot are consecutive;
within a same time slot, a TDD frame structure period, or a symbol configuration period of a sub band full duplex, a second type downlink symbol obtained by modification is continuous with a second type downlink symbol or a second type flexible symbol configured by uplink and downlink common configuration signaling; or
within a same time slot, a TDD frame structure period, or a symbol configuration period of the sub band full duplex, a second type flexible symbol obtained by modification is continuous with a second type downlink symbol or a second type flexible symbol configured by an uplink and downlink common configuration signaling.

In some embodiments, the modifying the second type symbol to the first type symbol is subject to at least one of the following constraint conditions:
a second type downlink symbol is only permitted to be modified to a first type downlink symbol;
a second type flexible symbol is only permitted to be modified to a first type flexible symbol;
first type symbols obtained by modification within a same time slot are consecutive;
a first type downlink symbol obtained by modification is continuous with an original first type downlink symbol within a same time slot;
a first type flexible symbol obtained by modification is continuous with an original first type flexible symbol within a same time slot; or
a number of conversion points added within a same time slot, a frame structure period, or a symbol configuration period of a sub band full duplex shall not exceed a preset number. The conversion points include: a conversion point from the first type symbol to the second type symbol, and a conversion point from the second type symbol to the first type symbol.

In some embodiments, a constraint condition is determined in one of the following manners:
determined and notified by the first node to the second node;
determined and notified by the second node to the first node;
determined through negotiation between the first node and the second node; or
predefined between the first node and the second node.

In some embodiments, the first information is in a format of a downlink control information.

In some embodiments, the first information is radio resource control signaling.

In some embodiments, the first information is transmitted via a common physical control channel or via a physical control channel dedicated to a terminal device.

In some embodiments, in a case where the first information is transmitted via the common physical control channel, the first information in the common physical control channel is scrambled by a predefined RNTI, where the predefined RNTI indicates that a function of the first information is to determine the symbol attribute.

In some embodiments, in a case where the first information is transmitted via the physical control channel dedicated to the terminal device, the first information includes an eighth parameter. Setting the eighth parameter to a first value indicates that a function of the first information is to determine the symbol attribute, and setting the eighth parameter to a second value indicates that a function of the first information is to schedule uplink/downlink data.

In some embodiments, the first information is in a DCI format used for scheduling PDSCH, and the DCI format is scrambled by C-RNTI, and an eighth parameter is a first value. In this case, the DCI format is either not used to schedule a PDSCH or is used to schedule a PDSCH without downlink data; or,
the first information is in a DCI format used for scheduling PUSCH, and the DCI format is scrambled by C-RNTI, and the eighth parameter is the first value. In this case, the DCI format is either not used to schedule a PUSCH or is used to schedule a PUSCH without uplink data.

In some embodiments, the first node sends second information to the second node; correspondingly, the second node receives the second information from the first node. The second information is used to indicate that the second node is permitted to modify the symbol attribute.

In some embodiments, the first node receives third information from the second node; correspondingly, the second node sends the third information to the first node. The third information is used to indicate that the second node supports modifying the symbol attribute.

Based on this, by determining the symbol attribute corresponding to the symbol, the problem of conflicting between the transmission direction supported by the transmission resource on the symbol and the transmission direction of the signal to be transmitted may be resolved, and then the base station and the UE may determine whether to perform the DL transmission or the UL transmission.

To explain the technical solutions of the present disclosure in more detail, some implementations are provided below.

The following lists several possible cases where the first transmission resource overlaps with the transmission resource of the signal to be transmitted between the first node and the second node, and the transmission direction supported by the first transmission resource conflicts with the transmission direction of the signal to be transmitted. The present disclosure includes but is not limited to the following cases.

Case 1: if a DL transmission signal of the UE is a PDSCH, and the PDSCH is scheduled/activated by the DCI in the PDCCH, and the DCI is scrambled by C-RNTI, MCS-C-RNTI, CS-RNTI, G-RNTI, G-CS-RNTI or MCCH-RNTI, and if a resource of the PDSCH overlaps with a resource of the UL subband in the SBFD symbol (including overlapping in time domain and/or frequency domain), and the base station determines that the PDSCH is transmitted in the resource of the PDSCH (i.e., the overlapping resource is also used by the PDSCH), then the base station and the UE shall proceed in the following manner. Note: the DL transmission may be for an old UE, or a new UE that is not configured with an SBFD subband, or a UE that is configured with the SBFD subband. In some embodiments, the DL transmission herein are considered by the base station and the UE to be a transmission with higher physical layer priority.

Case 2: if the UL transmission of the UE is scheduled or configured in the UL subband of the SBFD symbol, and the DCI in the PDCCH corresponding to the UL transmission is scrambled by C-RNTI, CS-RNTI, TC-RNTI, MCS-C-RNTI, CG-SDT-CS-RNTI or RA-RNTI (the UL transmission including a PRACH transmission, as well as a PRACH transmission triggered by the PDCCH order), and some resources of the UL transmission exceed a time domain (symbol) range of the UL subband in a corresponding SBFD slot (i.e., some resources of the UL transmission overlap with the DL subband/guard interval (gap) in the SBFD subband), then the base station and the UE agree to process the UL transmission in the following manner. Note: the UL transmission is for a new UE configured with an SBFD subband. In some embodiments, the UL transmission herein are considered by the base station and the UE to be a transmission with higher priority.

Case 3: if the UL transmission of the UE is scheduled or configured in the UL subband of the SBFD symbol, and the DCI in the PDCCH corresponding to the UL transmission is scrambled by C-RNTI, CS-RNTI, TC-RNTI, MCS-C-RNTI, CG-SDT-CS-RNTI or RA-RNTI (the UL transmission including the PRACH transmission, as well as the PRACH transmission triggered by the PDCCH order), and the resource of the UL transmission is within the time domain (symbol) range of the UL subband, but the UL transmission overlaps with the DL transmission in the DL subband of the SBFD symbol in time domain, then the base station and the UE agree to process the UL transmission in the following manner. Note: the UL transmission is for a new UE configured with an SBFD subband. In some embodiments, the UL transmission herein are considered by the base station and the UE to be a transmission with higher priority.

Case 4: if a DL transmission signal of the UE is a PDSCH, and the PDSCH is scheduled/activated by the DCI in the PDCCH, and the DCI is scrambled by SI-RNTI, RA-RNTI, MSGB-RNTI, P-RNTI or TC-RNTI, and if the resource of the PDSCH overlaps with the resource of the UL subband in the SBFD symbol (including overlapping in the time domain and/or frequency domain), and the base station determines that the PDSCH is transmitted in the resource of the PDSCH (i.e., the overlapping resource also being used by the PDSCH), then the base station and the UE shall proceed in the following manner. Note: the PDSCH herein refers to a DL transmission signal with higher priority in the system, even higher than a transmission signal with higher physical priority. Note: the DL transmission may be for an old UE, a new UE that is not configured with an SBFD subband, or a UE configured with the SBFD subband. In some embodiments, the DL transmission herein is considered by the base station and UE to be a transmission with higher priority.

Case 5: if a DL transmission signal of the UE is a PDCCH, and the DCI in the PDCCH is scrambled by C-RNTI, MCS-C-RNTI, CS-RNTI, G-RNTI, G-CS-RNTI or MCCH-RNTI, and if the resource of the PDCCH overlaps with the resource of the UL subband in the SBFD symbol (including overlapping in the time domain and/or frequency domain), and the base station determines that the PDCCH is transmitted in the resource of the PDCCH (i.e., the overlapping resource also being used by the PDCCH), then the base station and the UE shall proceed in the following manner. Note: the DL transmission may be for an old UE, a new UE that is not configured with an SBFD subband, or a UE configured with the SBFD subband. In some embodiments, the DL transmission herein are considered by the base station and the UE to be a transmission with higher physical layer priority.

Case 6: if a DL transmission signal of the UE is a PDCCH, and the DCI in the PDCCH is scrambled by SI-RNTI, RA-RNTI, MSGB-RNTI, P-RNTI or TC-RNTI, and if the resource of the PDCCH overlaps with the resource of the UL subband in the SBFD symbol (including overlapping in the time domain and/or frequency domain), and the base station determines that the PDCCH is transmitted in the resource of the PDCCH (i.e., the overlapping resource also being used by the PDCCH), then the base station and the UE shall proceed in the following manner. Note: the DL transmission may be for an old UE, a new UE that is not configured with an SBFD subband, or a UE configured with the SBFD subband. In some embodiments, the DL transmission herein are considered by the base station and the UE to be a transmission with higher physical layer priority.

Case 7: alternatively, if a DL transmission signal of the UE is a downlink reference signal, and if the resource of the downlink reference signal overlaps with the resource of the UL subband in the SBFD symbol (including overlapping in the time domain and/or frequency domain), and the base station determines that the downlink reference signal is transmitted in the resource of the downlink reference signal (i.e., the overlapping resource also being used by the downlink reference signal), then the base station and the UE shall proceed in the following manner. Note: the DL transmission may be for an old UE, a new UE that is not configured with an SBFD subband, or a UE configured with the SBFD subband. In some embodiments, the DL transmission herein are considered by the base station and the UE to be a transmission with higher physical layer priority.

The base station and the UE agree to process the above-mentioned DL transmission or UL transmission according to at least one of the following aspects.

### Aspect 1: specific methods for notifying the UE.

Option 1-1: the base station modifies the DL/F symbol configured with an SBFD subband to a DL/F symbol that is not configured with the SBFD subband by sending DCI (first information) to the terminal (i.e., cancelling an SBFD subband configuration in the DL/F symbol, and obtaining a DL/F symbol without SBFD subband, that is, modifying the SBFD symbol to a non-SBFD symbol). Alternatively, the base station may modify a DL/F symbol that is not configured with an SBFD subband to a DL/F symbol configured with the SBFD subband through the DCI. The DCI may be in a common PDCCH or in a UE-specific PDCCH. The above operations may be configured for a common (cell-level) SBFD subband (or SBFD symbol) or for a UE-level (UE-specific) SBFD subband (or SBFD symbol). The resource of the UE-level SBFD subband should be located in the resource of the cell-level SBFD subband. A symbol position of the UE-level SBFD subband is consistent with a symbol position of a common SBFD subband in the time domain (or the symbol position of the UE-level SBFD subband being a subset of the symbol position of the common SBFD subband). If the symbol position of the UE-level SBFD subband is consistent with the symbol position of the common SBFD subband in the time domain, and the symbol attribute of the corresponding symbol of the common SBFD subband is modified, then by default, a same symbol corresponding to the UE-level SBFD subband will also be performed a same symbol attribute modification. However, if the symbol attribute of the corresponding symbol of the UE-level SBFD subband is modified, then a same symbol corresponding to the common SBFD subband may not be performed the same symbol attribute modification.

For example, if the base station wants to transmit the aforementioned DL transmission in the resource that is scheduled or configured for the DL transmission, however, the resource of the DL transmission overlaps with the UL subband configured with an SBFD subband in the DL symbol (or the resource of the DL transmission containing the resource of the UL subband in the SBFD subband, or the resource of the DL transmission containing an SBFD symbol where the SBFD subband is located), then before transmitting the DL transmission, the base station transmits a DCI in the PDCCH, and modifies the DL/F symbol configured with the SBFD subband to the DL/F symbol that is not configured with the SBFD subband based on the information in the DCI. That is, the SBFD symbol in the symbol where the DL transmission is located is modified to the DL symbol that is not configured with the SBFD subband, and then the DL transmission is completed in the DL symbol. In this way, the resource of the DL transmission no longer overlaps with the UL subband, because the SBFD symbol where the overlapping resource is located has been modified to a DL symbol that is not configured with SBFD subband (that is, cancelling a configuration of the SBFD subbands, and in this way, the UL subbands no longer exist). The modified symbol should include the SBFD symbol where the resource of the DL transmission is located.

For example, if the base station wants to transmit the aforementioned UL transmission in the resource that is scheduled or configured for the UL transmission, but the resource of the UL transmission overlaps with the DL symbol, then before transmitting the UL transmission, the base station transmits a DCI in the PDCCH, and modifies the DL symbol that is not configured with the SBFD subband to the DL symbol configured with the SBFD subband based on the information in the DCI, thereby ensuring that the resource of the UL transmission fall into the UL subband in the SBFD subband. In this way, the UL transmission may be executed within a resource corresponding to the UL transmission. The modified symbol should include a symbol where the resource of the UL transmission is located.

Option 1-2: the base station notifies the UE via (RRC) signaling A that the DL symbols (or F symbols, or both DL and F symbols) configured with the SBFD subband are permitted to be modified to DL symbols (or F symbols, or both DL and F symbols) that are not configured with the SBFD subband. When a UE receives the signaling, the base station may perform the aforementioned symbol modification operation for the UE configuration. If the base station is not provided with the (RRC) signaling A to the UE, the base station cannot perform the aforementioned symbol modification operation for the UE configuration.

Alternatively, the UE may report to the base station via a signaling that the UE supports the aforementioned modified symbol, that is, the UE has a capability to perform the aforementioned symbol modification operation, only then can the base station perform the aforementioned symbol modification operation for the UE configuration; otherwise, the base station cannot perform the aforementioned symbol modification operation for the UE configuration.

### Aspect 2, functional design of the DCI.

Option 2-1: the DCI is used to determine the symbol attributes of some symbols (specific symbols) in some slots (or TDD frame structure periods or symbol configuration periods of the sub band full duplex). The symbol attributes include: a DL symbol (DL symbol that is not configured with an SBFD), an SBFD symbol (DL symbol/F symbol configured with an SBFD subband), an F symbol (F symbol that is not configured with the SBFD), etc. For example, if some symbols are indicated by the DCI, then the symbol attributes of these symbols are modified from their original symbol attributes to the symbol attributes indicated by the DCI. Note: if a DL symbol/F symbol is configured with an SBFD subband, then the DL symbol/F symbol may be denoted as an SBFD symbol. If the SBFD subband of the SBFD symbol is canceled, then the SBFD symbol will be restored/reverted to the original DL symbol/F symbol. For example, the DCI includes at least one of a parameter 1 to a parameter 3:
the parameter 1 is a parameter used to determine a slot (or a TDD frame structure period or a symbol configuration period of a sub band full duplex). If the parameter is absent, the base station and UE default to that: the determined slot (or a TDD frame structure period or a symbol configuration period of a sub band full duplex) is an s-th slot (or a TDD frame structure period or a symbol configuration period of a sub band full duplex) after the slot where the PDCCH containing the DCI is received, where s is a natural number. s being 0 indicates a slot where the PDCCH is located (or the TDD frame structure period or the symbol configuration period of the sub band full duplex) (also applicable to options 2-2, 2-3 and 2-4 below);
the parameter 2 is a parameter used to determine a symbol position in the determined slot (or a TDD frame structure period or a symbol configuration period of a sub band full duplex). If the parameter is absent, the base station and UE default to that: all DL symbols and/or F symbols in the determined slot (or TDD frame structure period or symbol configuration period of sub band full duplex) are executed according to the instructions of the symbol attribute parameter (parameter 3) (also applicable to options 2-2, 2-3 and 2-4 below);
the parameter 3 is a parameter that determines a symbol attribute of the determined symbol. If the parameter is absent, the base station and UE default to that: the symbol attribute of the determined symbol is restored/reverted to an original symbol attribute (i.e., cancelling the SBFD subband of the determined symbol, so that the determined symbol is restored to an original DL symbol or F symbol that is not configured with a sub band full duplex) (also applicable to options 2-2, 2-3 and 2-4 below); or, the symbol attribute of the determined symbol is modified to the SBFD symbol (also applicable to options 2-2, 2-3 and 2-4 below).

Option 2-2: the DCI is used to determine that the symbol attributes of some symbols (specific symbols) in some slots (or TDD frame structure periods or symbol configuration periods of sub band full duplex) have changed, including at least one of: from an SBFD symbol to a DL symbol that is not configured with a sub band full duplex; from the SBFD symbol to an F symbol; from the DL symbol that is not configured with the sub band full duplex to the SBFD symbol; from the F symbol to the SBFD symbol; or reverting to the original symbol attribute (i.e., cancelling the existing symbol attribute). For example, the DCI includes at least one of a parameter 4 to a parameter 6: the parameter 4 is a parameter used to determine the slot (or a TDD frame structure period or a symbol configuration period of a sub band full duplex); the parameter 5 is a parameter used to determine a symbol position in the determined slot (or a TDD frame structure period or a symbol configuration period of a sub band full duplex); or the parameter 6 is a parameter used to determine the symbol attribute of the determined symbol.

Option 2-3: the DCI is used to determine whether some SBFD symbols (specific symbols) in some slots (or TDD frame structure periods or symbol configuration periods of the sub band full duplex) become DL symbols (downlink symbols that are not configured with the SBFD) (if the SBFD symbols were originally obtained by configuring SBFD subbands from DL symbols), or become F symbols (if the SBFD symbols were originally obtained by configuring SBFD subbands from F symbols). For example, the DCI includes at least one of a parameter 7 or parameter 8: the parameter 7 is a parameter used to determine the slot (or a TDD frame structure period or a symbol configuration period of a sub band full duplex), or the parameter 8 is a parameter used to determine a symbol position in the determined slot (or the TDD frame structure period or the symbol configuration period of the sub band full duplex). The base station and the UE agree that for the symbols determined by the DCI, if the determined symbols are SBFD symbols, the symbol attributes of these symbols will be restored/reverted to the original DL symbols/F symbols.

Option 2-4: the DCI is used to determine whether a number of SBFD symbols is added or removed by k in some slots (or TDD frame structure periods or symbol configuration periods of the sub band full duplex). For example, the DCI indicates a TDD frame period or a symbol configuration period of a sub band full duplex or a slot (or the base station and the UE agree on a TDD frame structure or a symbol configuration period of a sub band full duplex or a slot), including: an s-th (s being a natural number) TDD frame structure period or symbol configuration period of a sub band full duplex or slot after the slot where the PDCCH containing the DCI is received. s being 0 indicates a slot or a TDD frame structure period or a symbol configuration period of a sub band full duplex where the PDCCH is located. In the indicated TDD frame structure period or the symbol configuration period of the sub band full duplex or the slot, an operation mode of adding or removing SBFD symbol is determined (according to another indication information in the DCI or an agreement between the base station and the UE). The operation mode includes at least one of:
determining to add k SBFD symbols (first type symbols) starting from an ending of existing SBFD symbols (first type symbols) backward;
determining to add k SBFD symbols (first type symbols) starting from a beginning of the existing SBFD symbols (first type symbols) forward;
determining to remove k SBFD symbols (first type symbols) starting from the ending of the existing SBFD symbols (first type symbols) forward. (The removed SBFD symbols are modified to their original symbol attributes. For example, if the SBFD symbol was obtained by configuring the SBFD symbol with the DL symbol, then the SBFD symbol is restored to the DL symbol. For example, if the SBFD symbol was obtained by configuring the SBFD symbol with the F symbol, then the SBFD symbol is restored to the F symbol, which will not be repeated herein); or
determining to remove k SBFD symbols (first type symbols) starting from the beginning of the existing SBFD symbols (first type symbols) backward.

Based on options 2-4, the DCI includes at least one of a parameter 9 to a parameter 13.

The parameter 9 is a parameter used to determine the slot (or a TDD frame structure period or an SBFD symbol configuration period).

The parameter 10 is a parameter used to determine a number of SBFD symbols to be added. If the parameter is absent, all DL symbols and/or F symbols in the determined slot (or the TDD frame structure period or the SBFD symbol configuration period) will be configured as SBFD symbols by default.

The parameter 11 is a parameter used to determine a number of SBFD symbols to be removed. If the parameter is absent, all SBFD symbols in the determined slot (or the TDD frame structure period or the SBFD symbol configuration period) will have their SBFD subband configuration canceled and will be restored to their original symbol attributes by default.

The parameter 12 is a parameter used to determine an operation mode for increasing SBFD symbols. If the parameter is absent, the SBFD symbol will be added starting from an ending of existing SBFD symbol backward by default.

The parameter 13 is a parameter used to determine an operation mode for decreasing SBFD symbols. If the parameter is absent, the SBFD symbol will be removed starting from the ending of existing SBFD symbol forward by default.

In summary, based on the options 2-1 to 2-4, the DCI may include at least one of a first parameter to a seventh parameter:
the first parameter is used to determine a slot, a TDD frame structure period, or a symbol configuration period of a sub band full duplex;
the second parameter is used to determine a position of a specific symbol;
the third parameter is used to determine the symbol attribute of the specific symbol; where the determining the symbol attribute corresponding to the symbol, includes any of: determining the symbol attribute of the specific symbol; determining that the symbol attribute of the specific symbol have changed; determining that a specific SBFD symbol has been modified into a non-SBFD symbol; or determining to add or remove k SBFD symbols, where k is a positive integer. The determining to add or remove k SBFD symbols, includes at least one of: determining to add k SBFD symbols starting from an ending of existing SBFD symbols backward; determining to add k SBFD symbols starting from a beginning of the existing SBFD symbols forward; determining to remove k SBFD symbols starting from the ending of the existing SBFD symbols forward; or determining to remove k SBFD symbols starting from the beginning of the existing SBFD symbols backward;
the fourth parameter is a parameter used to indicate a number of SBFD symbols to be added. If the parameter is omitted, all DL symbols and/or F symbols in the determined slot (or TDD frame structure period or symbol configuration period of the sub band full duplex) will be configured with SBFD symbols by default;
the fifth parameter is a parameter used to determine an operation mode for increasing the SBFD symbol. If the parameter is absent, an SBFD symbol will be added starting from an ending of existing SBFD symbol backward by default;
the sixth parameter is a parameter used to indicate a number of SBFD symbols to be removed. If the parameter is absent, all SBFD symbols in the determined slot (or a TDD frame structure period or a symbol configuration period of the sub band full duplex) will have their SBFD subband configuration cancelled and will be restored to their original symbol attributes; or
the seventh parameter is a parameter used to determine an operation mode for decreasing SBFD symbols. If the parameter is absent, the SBFD symbol will be removed starting from an ending of existing SBFD symbol forward by default.

Based on the options 2-1 to 2-4, the validity of the determined symbol attribute satisfies any of:
the validity of the determined symbol attribute persists until the validity of the symbol attribute is indicated to change again;
the determined symbol attribute is only valid for a current instruction;
the determined symbol attribute is valid within a current TDD frame period;
the determined symbol attribute is only valid within a symbol configuration period of a sub band full duplex; or
the determined symbol attribute remains valid for a validity duration further indicated by the DCI. For example, the determined symbol attribute remains valid for n TDD frame periods or for m symbol configuration periods of the sub band full duplex.

The parameters in the above four options may be used in combination if the options do not conflict with each other. For example, a parameter in the option 2-2 may be combined with one or more parameters in the option 2-1 for usage in DCI.

### Aspect 3, a transmission method of the DCI.

Option 3-1: DCI is transmitted via a common PDCCH.

For example, if the PDCCH is a common PDCCH, then the DCI in the PDCCH is not in a DCI format for scheduling PUSCH, and is scrambled by the predefined RNTI. The base station and the UE agree that the predefined RNTI represents the DCI as a DCI that indicates/modifies/reverts the symbol attributes of one or more symbols in a slot (or a TDD frame structure period or a symbol configuration period of a sub band full duplex), and that (new) symbol attributes of one or more symbols in one or more slots (or a TDD frame structure period or a symbol configuration period of the sub band full duplex) can be determined based on one or more parameters in the DCI. That is, the DCI includes a parameter that indicates one or more slots (or a TDD frame structure period or a symbol configuration period of the sub band full duplex), and one or more slots (or the TDD frame structure period or the symbol configuration period of the sub band full duplex) determined based on the parameter. In some embodiments, the DCI further includes a parameter indicating a symbol position. Based on such parameter, it is possible to determine which symbols have symbol attributes thereof indicated/modified/fallen back in a determined slot (or a TDD frame structure period or a symbol configuration period of the sub band full duplex). If the DCI does not include a symbol position parameter, the symbol attributes of all SBFD symbols in the determined slot (or the TDD frame structure period or the symbol configuration period of the sub band full duplex) are changed to cancel SBFD subband and restored to the original symbol attributes by default. The DCI may also adopt one of the designs in the options 2-1 to 2-4. For example, the DCI includes various parameters proposed in one of the designs in the options 2-1 to 2-4.

The base station and the UE agrees to indicate/modify/fall back include at least one of:
an additional parameter in the DCI indicates the symbol attribute of the determined symbol (the original symbol attribute of the indicated symbol being ignored, but the indicated symbol has a new symbol attribute indicated by the DCI);
the symbol attribute of the symbol determined by the DCI is changed from an SBFD symbol to a DL symbol/F symbol (if the symbol attribute of the determined symbol is the SBFD symbol); or
the symbol attribute of the symbol determined by the DCI is changed from the DL symbol/F symbol to the SBFD symbol (if the original symbol attribute of the determined symbol was DL symbol/F symbol).

Option 3-2: the DCI is transmitted via a UE-specific PDCCH.

The DCI introduces an eighth parameter, or reinterprets an existing parameter as the eighth parameter. The eighth parameter being a first value indicates that a function of the DCI is to determine a symbol attribute; the eighth parameter being a second value indicates that a function of the first information is to schedule uplink/downlink data. Furthermore, one or more parameters in the DCI are used to describe the symbol attributes of one or more symbols in one or more slots (or TDD frame structure periods or symbol configuration periods of the sub band full duplex). The DCI may also adopt one of the designs in the options 2-1 to 2-4. For example, the DCI includes various parameters proposed in one of the designs in the options 2-1 to 2-4.

For example, if the PDCCH is a UE-specific PDCCH, then the DCI in the PDCCH is in a DCI format for scheduling PUSCH and is scrambled by C-RNTI. If the PDCCH is specific, and an eighth parameter is a first value, then the DCI in the PDCCH is not used to schedule PUSCH, or to schedule a PUSCH without UL data. In this way, since the DCI also uses C-RNTI scrambling, based on the eighth parameter, the UE being unable to distinguish whether the DCI is used to schedule PUSCH with UL data or to indicate that the symbol attributes of some symbols in some slots (or TDD frame structure periods or symbol configuration periods of the sub band full duplex) are indicated/modified/fallen back based on the RNTI type may be avoided.

For example, by (reinterpreting) a PUSCH time-domain resource allocation parameter in the DCI, a k2 value and (optionally) a PUSCH symbol position may be obtained, where the k2 value is used to determine the slot (or the TDD frame structure period or the symbol configuration period of the sub band full duplex). In some embodiments, the PUSCH symbol position is used to determine a position of a symbol whose symbol attribute to be indicated/modified/fallen back is located within the determined slot (or the TDD frame structure period or the symbol configuration period of the sub band full duplex). Then, the symbol attribute of the symbol determined based on the k2 and the PUSCH symbol position is indicated/modified/fallen back. For example, an additional parameter in the DCI (e.g., reinterpreting PUSCH frequency domain resource) may directly indicate that the symbol attribute of the determined symbol is one of: a DL symbol, an SBFD symbol, or an F symbol. In this case, the symbol attribute of the determined symbol is based on the the symbol attribute indicated by the additional signaling (original symbol attribute being ignored). For example, if the symbol attribute of the determined symbol was originally an SBFD symbol, the symbol attribute of the determined symbol is agreed to be changed from the SBFD symbol to a DL symbol, or if the symbol attribute of the determined symbol was originally the DL symbol, the symbol attribute of the determined symbol is agreed to be changed from the DL symbol to the SBFD symbol. In this case, no additional indication information is needed in the DCI to indicate the symbol attribute of the determined symbol. By adopting this method, there is no need for the UE to monitor additional DCI format, thereby reducing a number of DCI formats that the UE needs to monitor.

For example, if the PDCCH is a UE-specific PDCCH, then the DCI in the PDCCH is in a DCI format for scheduling PDSCH and is scrambled by C-RNTI. If the PDCCH is specific, an eighth parameter is a first value, and the DCI in the PDCCH is not used to schedule a PDSCH, or to schedule a PDSCH without DL data. In this way, since the DCI also uses C-RNTI scrambling, based on the eighth parameter, the UE being unable to distinguish whether the DCI is used to schedule PUSCH with UL data or to indicate that the symbol attributes of some symbols in some slots (or TDD frame structure periods or symbol configuration periods of the sub band full duplex) are indicated/modified/fallen back based on the RNTI type may be avoided.

For example, a k0 value and (optionally) a PDSCH symbol position may be obtained by (reinterpreting) a PDSCH time-domain resource allocation parameter in the DCI, where the k0 value is used to determine the slot (or the TDD frame structure period or the symbol configuration period of the sub band full duplex). In some embodiments, the PDSCH symbol position is used to determine a position of a symbol whose symbol attribute to be indicated/modified/fallen back is located within the determined slot (or the TDD frame structure period or the symbol configuration period of the sub band full duplex). Then, the symbol attribute of the symbol determined based on the k0 and the PDSCH symbol position is indicated/modified/fallen back. For example, an additional parameter in the DCI (e.g., reinterpreting PDSCH frequency domain resource) may directly indicate that the symbol attribute of the determined symbol is one of: a DL symbol, an SBFD symbol, or an F symbol. In this case, the symbol attribute of the determined symbol is based on the symbol attribute indicated by the additional signaling (the original symbol attribute being ignored). For example, if the symbol attribute of the determined symbol was originally an SBFD symbol, the symbol attribute of the determined symbol is agreed to be changed from the SBFD symbol to a DL symbol, or if the symbol attribute of the determined symbol was originally the DL symbol, the symbol attribute of the determined symbol is agreed to be changed from the DL symbol to the SBFD symbol. In this case, no additional indication information is needed in the DCI to indicate the symbol attribute of the determined symbol. By adopting this method, there is no need for the UE to monitor additional DCI format, thereby reducing a number of DCI formats that the UE needs to monitor.

### Aspect 4: other restrictions on modifying symbol attribute.

Regarding the modification of DL symbol/F symbol configured with an SBFD subband to DL symbol/F symbol that is not configured with the SBFD subband, a rule 4-1 to a rule 4-3 are at least included.

Rule 4-1: a DL symbol configured with an SBFD subband is modified to a DL symbol that is not configured with the SBFD subband.

For example, the base station and the UE agree that if a DL symbol is configured with an SBFD subband, then based on a notification of the aforementioned DCI, the DL symbol may only be modified/fallen back to a DL symbol that is not configured with the SBFD subband.

In some embodiments, based on the above method, in a slot, the DL symbols obtained through the above modifications are required to be continuous (if only one modified DL symbol is obtained, continuity is not required), and furthermore (optionally), a starting symbol or an ending symbol of the obtained DL symbol is required to be continuous with a DL symbol configured by an uplink and downlink common configuration signaling (tdd-UL-DL-ConfigurationCommon); otherwise, modifying the DL symbol configured with the SBFD subband to the DL symbol that is not configured with the SBFD subband is prohibited.

In some embodiments, based on the above method, within a TDD frame structure period or within a symbol configuration period of a sub band full duplex, the modified DL symbols are required to be continuous (if only one modified DL symbol is obtained, continuity is not required). Furthermore (optionally), a starting symbol or an ending symbol of the obtained DL symbol is required to be continuous with a DL symbol configured by tdd-UL-DL-ConfigurationCommon; otherwise, modifying the DL symbol configured with the SBFD subband to the DL symbol that is not configured with the SBFD subband is prohibited.

Rule 4-2: an F symbol configured with an SBFD subband is modified to an F symbol that is not configured with the SBFD subband.

For example, the base station and the UE agree that if an F symbol is configured with the SBFD subband, then based on the notification of the aforementioned DCI, the F symbol may only be modified/fallen back to the F symbol that is not configured with the SBFD subband.

In some embodiments, based on the above method, in a slot, the F symbols obtained by the above modification are required to be continuous (if only one modified F symbol is obtained, continuity is not required), and furthermore (optionally) a starting symbol or an ending symbol of the obtained F symbol is required to be continuous with a DL symbol or an F symbol configured by the tdd-UL-DL-ConfigurationCommon signaling; otherwise, modifying the F symbol configured with the SBFD subband to the F symbol that is not configured with the SBFD subband is prohibited.

In some embodiments, based on the above method, within a TDD frame structure period or within a symbol configuration period of a sub band full duplex, the F symbols obtained by modification are required to be continuous (if only one modified F symbol is obtained, continuity is not required). Furthermore (optionally), a starting symbol or an ending symbol of the obtained F symbol is required to be continuous with the DL symbol or the F symbol configured by the tdd-UL-DL-ConfigurationCommon signaling; otherwise, modifying the F symbol configured with the SBFD subband to the F symbol that is not configured with the SBFD subband is prohibited.

Rule 4-3: an F symbol configured with an SBFD subband is modified to a DL symbol that is not configured with the SBFD subband.

For example, the base station and the UE agree that if the F symbol is configured with the SBFD subband, then based on the notification from the aforementioned DCI, the F symbol may only be modified to the DL symbol that is not configured with the SBFD subband.

In some embodiments, based on the above method, in a slot, the DL symbols obtained by the above modifications are required to be continuous (if only one modified DL symbol is obtained, continuity is not required), and furthermore (optionally), a starting symbol or an ending symbol of the obtained DL symbol is required to be continuous with the DL symbol or the F symbol configured by the tdd-UL-DL-ConfigurationCommon signaling; otherwise, modifying the F symbol configured with the SBFD subband to the DL symbol that is not configured with the SBFD subband is prohibited.

In some embodiments, based on the above method, within a TDD frame structure period or within a symbol configuration period of a sub band full duplex, the DL symbols obtained by modification are required to be continuous (if only one modified DL symbol is obtained, continuity is not required). Furthermore (optionally), a starting symbol or an ending symbol of the obtained DL symbol is required to be continuous with the DL symbol or the F symbol configured by the tdd-UL-DL-ConfigurationCommon signaling; otherwise, modifying the F symbol configured with the SBFD subband to the DL symbol tha is not configured with the SBFD subband is prohibited.

Regarding the modification of DL/F symbols that are not configured with SBFD subbands to DL/F symbols that are configured with the SBFD subbands, a rule 4-4 to a rule 4-5 are at least included.

Rule 4-4: a DL symbol that is not configured with an SBFD subband is modified to a DL symbol (SBFD symbol) configured with the SBFD subband.

For example, the base station and the UE agree that if a DL symbol is not configured with the SBFD subband, then based on the notification of the aforementioned DCI, the DL symbol can be modified to a DL symbol configured with the SBFD subband (i.e., SBFD symbol).

In some embodiments, based on the above method, in a slot, the SBFD symbols obtained by the above modification are required to be continuous (if only one modified SBFD symbol is obtained, continuity is not required), and furthermore (optionally) a starting symbol or an ending symbol of the obtained SBFD symbol is required to be continuous with the original SBFD symbol (if any); otherwise, modifying the DL symbol of a DL symbol that is not configured with an SBFD subband to a DL symbol configured with the SBFD subband (i.e., SBFD symbol) is prohibited. Note: if a symbol configuration period of a sub band full duplex is composed of multiple (e.g., 2) TDD frame structure periods, and no SBFD symbol is configured in one of the TDD frame periods, then in a slot within the TDD frame period, when a DL symbol that is not configured with an SBFD subband is modified to a DL symbol configured with the SBFD subband (i.e., SBFD symbol) based on the above method, the SBFD symbols obtained through the modification are continuous with each other, and that the obtained SBFD symbols are continuous with the original SBFD symbols in the symbol configuration period of the sub band full duplex is not required.

In some embodiments, based on the above method, within a TDD frame structure period or within a symbol configuration period of a sub band full duplex, the SBFD symbols obtained through the above modifications are required to be continuous (if only one modified SBFD symbol is obtained, continuity is not required), and furthermore (optionally), a starting symbol or an ending symbol of the obtained SBFD symbol is required to be continuous with the original SBFD symbol (if any); otherwise, modifying a DL symbol that is not configured with an SBFD subband to a DL symbol configured with the SBFD subband (i.e., SBFD symbol) is prohibited. Note: if the symbol configuration period of a sub band full duplex is composed of multiple (e.g., 2) TDD frame structure periods, and no SBFD symbol is configured in one of the TDD frame periods, then when a DL symbol that is not configured with an SBFD subband is modified to a DL symbol configured with the SBFD subband (i.e., SBFD symbol) based on the above method in the TDD frame period, the SBFD symbols obtained through the modification are continuous with each other, and that the obtained SBFD symbols are continuous with the original SBFD symbols in the symbol configuration period of the sub band full duplex is not required.

Rule 4-5: an F symbol that is not configured with an SBFD subband is modified to an F symbol (SBFD symbol) configured with the SBFD subband.

For example, the base station and the UE agree that if the F symbol is not configured with the SBFD subband, then based on the notification of the aforementioned DCI, the F symbol may be modified to the F symbol configured with the SBFD subband (i.e., the SBFD symbol).

In some embodiments, based on the above method, in a slot, the SBFD symbols obtained by the above modifications are required to be continuous (if only one modified SBFD symbol is obtained, continuity is not required), and furthermore (optionally) a starting symbol or an ending symbol of the obtained SBFD symbol is required to be continuous with the original SBFD symbol (if any); otherwise, modifying the F symbol tha is not configured with the SBFD subband to the F symbol configured with the SBFD subband (i.e., an SBFD symbol) is prohibited. Note: if the symbol configuration period of a sub band full duplex is composed of multiple (e.g., 2) TDD frame structure periods, and no SBFD symbol is configured in one of the TDD frame periods, then in a slot within the TDD frame period, when the F symbol that is not configured with the SBFD subband is modified to the F symbol configured with the SBFD subband (i.e., the SBFD symbol) based on the above method, the SBFD symbols obtained through the modification are continuous with each other, and that the obtained SBFD symbols are continuous with the original SBFD symbols in the symbol configuration period of the sub band full duplex is not required.

In some embodiments, based on the above method, within a TDD frame structure period or within a symbol configuration period of a sub band full duplex, the SBFD symbols obtained through the above modification are required to be continuous (if only one modified SBFD symbol is obtained, continuity is not required), and furthermore (optionally), a starting symbol or an ending symbol of the obtained SBFD symbol is required to be continuous with the original SBFD symbol (if any); otherwise, modifying the F symbol that is not configured with the SBFD subband to the F symbol configured with the SBFD subband (i.e., the SBFD symbol) is prohibited. Note: if a symbol configuration period of a sub band full duplex is composed of multiple (e.g., 2) TDD frame structure periods, and no SBFD symbol is configured in one of the TDD frame periods, then when the F symbol that is not configured with the SBFD subband is modified to the F symbol configured with the SBFD subband (i.e., the SBFD symbol) based on the above method in the TDD frame period, the SBFD symbols obtained by the modification are continuous with each other, and that the obtained SBFD symbols are continuous with the original SBFD symbols in the symbol configuration period of the sub band full duplex is not required.

### Aspect 5, some other additional requirements.

Based on the above processing, a conversion from an SBFD symbol to a DL symbol/F symbol (the second type symbol being modified to the first type symbol) cannot introduce new conversion points within a slot, within a TDD frame structure period, or within a symbol configuration period of a sub band full duplex. The conversion points include: a conversion point from the SBFD symbol to the DL symbol/F symbol (referring to DL symbol/F symbol that is not configured with an SBFD subband), and a conversion point from the DL symbol/F symbol (referring to the DL symbol/F symbol that is not configured with the SBFD subband) to the SBFD symbol. For a TDD frame structure period or a symbol configuration period of a sub band full duplex, based on the above processing, if the above conversion points are added, a number of additions shall not exceed 2. For a case where a symbol configuration period of a sub band full duplex consists of multiple TDD frame structure periods, if the above conversion points are added within the symbol configuration period of the sub band full duplex based on the above processing, a number of additions within a TDD frame structure period of the multiple TDD frame structure periods shall not exceed 2 (or the number of additions within the symbol configuration period of the sub band full duplex shall not exceed 2n (n being a number of multiple TDD frame structure periods), and the number of additions within a TDD frame structure period of the multiple TDD frame structure periods shall not exceed 2).

Based on the above processing, the conversion from the SBFD symbol to the DL symbol/F symbol only occurs at an ending or beginning of (continuous) an SBFD symbol within a TDD frame structure period (or within a slot or within a symbol configuration period of a sub band full duplex). In this way, it is conducive to reducing the number of conversion points. The conversion from the DL symbol/F symbol to the SBFD symbol only occurs within a TDD frame structure period (or within a slot or within a symbol configuration period of sub band full duplex) of adjacent (continuous) DL/F symbols. Based on the above operations, the updated SBFD symbols may still remain continuous within a TDD frame structure period (or within a slot or a symbol configuration period of a sub band full duplex).

Based on the above processing, after the DL symbol/F symbol is converted into the SBFD symbol, a configuration of the SBFD subband in the obtained SBFD symbol (including time and frequency resources, subcarrier spacing, CP, etc.) is same as a configuration of the SBFD subband in the original SBFD symbol by default.

The above introduces the solutions of the embodiments of the present disclosure mainly from the perspective of methods. A signal transmission apparatus is also shown below, the signal transmission apparatus is used to perform the signal transmission method in any one of the above embodiments and possible implementations thereof. It can be understood that, the signal transmission apparatus, in order to implement the signal transmission method, includes corresponding hardware structures and/or software modules for executing various functions. Those skilled in the art should easily realize that the present disclosure may be implemented in the form of hardware or a combination of hardware and computer software in combination with algorithms and steps described in the embodiments disclosed in the present disclosure. Whether a certain function is performed by hardware or computer software-driven hardware depends on the specific application and design constraint condition of the technical solutions. Professional technicians may use different methods to implement the described functions for each specific application, but such implementation should not be considered beyond the scope of the present disclosure.

The embodiments of the present disclosure may divide the signal transmission apparatus into functional module(s) according to the aforementioned method embodiment(s), for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

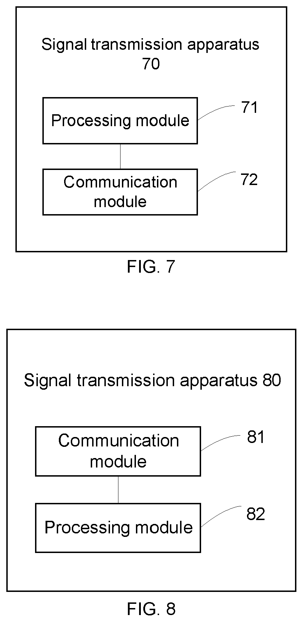

FIG. 7 is a signal transmission apparatus provided in the embodiments of the present disclosure. The signal transmission apparatus is applied to a first node. The signal transmission apparatus 70 includes: a processing module 71 and a communication module 72.

The processing module 71 is configured to generate first information, where the first information is used to determine a symbol attribute corresponding to a symbol.

The communication module 72 is configured to send the first information to a second node, where the first information is used to determine the symbol attribute corresponding to the symbol.

In some embodiments, the communication module 72 is configured to receive or transmit a signal to be transmitted on a first transmission resource containing the symbol based on the symbol attribute corresponding to the symbol determined by the first information; the first transmission resource overlaps with a transmission resource of the signal to be transmitted between the first node and the second node, and a transmission direction supported by the first transmission resource conflicts with a transmission direction of the signal to be transmitted.

In some embodiments, the communication module 72 is configured to receive or transmit a signal to be transmitted based on the symbol attribute corresponding to the symbol determined based on the first information, where the transmission direction of the signal to be transmitted does not conflict with the symbol attribute corresponding to the symbol determined based on the first information.

In some embodiments, the signal to be transmitted on the symbol for receiving or transmitting includes at least one of:
physical downlink control channel (PDCCH);
physical downlink shared channel (PDSCH);
synchronization signal and physical broadcast channel block (SSB);
physical random access channel (PRACH);
physical uplink control channel (PUCCH);
downlink reference signal;
physical uplink shared channel (PUSCH); or
uplink reference signal.

In some embodiments, the symbol attribute of a symbol includes a first type symbol and a second type symbol; the first type symbol is a symbol configured with a sub band full duplex, and the second type symbol is a symbol that is not configured with the sub band full duplex;
the first type symbol includes at least one of: a first type downlink symbol, or a first type flexible symbol;
the second type symbol includes at least one of: a second type downlink symbol, or a second type flexible symbol.

In some embodiments, in a case where the transmission direction of the signal to be transmitted is an uplink direction, the first transmission resource includes at least one of:
a downlink subband on the first type symbol;
a guard interval on the first type symbol; or
a second type symbol.

In some embodiments, in a case where the transmission direction of the signal to be transmitted is a downlink direction, the first transmission resource includes at least one of:
an uplink subband on a first type symbol; or
a guard interval on the first type symbol.

In some embodiments, that the first information is used to determine the symbol attribute corresponding to the symbol, includes any one of:
determining a symbol attribute of a specific symbol;
determining that a symbol attribute of a specific symbol have changed;
determining that a specific first type symbol is modified to a second type symbol; or
determining to add or remove k first type symbols, where k is a positive integer.

In some embodiments, the determining to add or remove k first type symbols, includes at least one of:
determining to add k first type symbols starting from an ending of existing first type symbol backward;
determining to add k first type symbols starting from a beginning of the existing first type symbol forward;
determining to remove k first type symbols starting from the ending of the existing first type symbol forward; or
determining to remove k first type symbols starting from the beginning of the existing first type symbol backward.

In some embodiments, the first information includes at least one of the following parameters: a first parameter, a second parameter, a third parameter, a fourth parameter, a fifth parameter, a sixth parameter, or a seventh parameter. Where the first parameter is used to determine a time slot, a TDD frame structure period, or a symbol configuration period of a sub band full duplex; the second parameter is used to determine a position of a specific symbol; the third parameter is used to determine a symbol attribute of a specific symbol; the fourth parameter is used to indicate a number of first type symbols added; the fifth parameter is used to indicate an addition manner; the sixth parameter is used to indicate a number of first type symbols removed; or the seventh parameter is used to indicate a reduction manner.

In some embodiments, a validity of a determined symbol attribute satisfies any of:
the validity of the determined symbol attribute persists until the validity of the symbol attribute is indicated to change again;
the determined symbol attribute is only valid for a current instruction;
the determined symbol attribute is valid within a current TDD frame period;
the determined symbol attribute is valid within a current first type symbol configuration period; or
the determined symbol attribute remains valid for a validity duration further indicated by the first information.

In some embodiments, the determining the symbol attribute corresponding to the symbol, includes at least one of:
modifying the first type symbol to the second type symbol; or
modifying the second type symbol to the first type symbol.

In some embodiments, the modifying the first type symbol to the second type symbol is subject to at least one of the following constraint conditions:
a first type downlink symbol is only permitted to be modified to a second type downlink symbol;
a first type flexible symbol is only permitted to be modified to the second type downlink symbol, or, the first type flexible symbol is only permitted to be modified to a second type flexible symbol;
second type symbols obtained by modification within a same time slot are consecutive;
within a same time slot, a TDD frame structure period, or a symbol configuration period of a sub band full duplex, a second type downlink symbol obtained by modification is continuous with a second type downlink symbol or a second type flexible symbol configured by an uplink and downlink common configuration signaling; or
within a same time slot, a TDD frame structure period, or a symbol configuration period of the sub band full duplex, a second type flexible symbol obtained by modification is continuous with a second type downlink symbol or a second type flexible symbol configured by an uplink and downlink common configuration signaling.

In some embodiments, the modifying the second type symbol to the first type symbol is subject to at least one of the following constraint conditions:
a second type downlink symbol is only permitted to be modified to a first type downlink symbol;
a second type flexible symbol is only permitted to be modified to a first type flexible symbol;
first type symbols obtained by modification within a same time slot are consecutive;
a first type downlink symbol obtained by modification is continuous with an original first type downlink symbol within a same time slot;
a first type flexible symbol obtained by modification is continuous with an original first type flexible symbol within a same time slot; or
a number of conversion points added within a same time slot, a frame structure period, or a symbol configuration period of a sub band full duplex shall not exceed a preset number; the conversion points include: a conversion point from the first type symbol to the second type symbol, and a conversion point from the second type symbol to the first type symbol.

In some embodiments, a constraint condition is determined in one of the following manners:
determined and notified by the first node to the second node;
determined and notified by the second node to the first node;
determined through negotiation between the first node and the second node; or
predefined between the first node and the second node.

In some embodiments, the first information is in a format of downlink control information.

In some embodiments, the first information is transmitted via a common physical control channel or via a physical control channel dedicated to the terminal device.

In some embodiments, in a case where the first information is transmitted via the common physical control channel, the first information in the common physical control channel is scrambled by a predefined RNTI, where the predefined RNTI indicates that a function of the first information is to determine the symbol attribute.

In some embodiments, in a case where the first information is transmitted via the physical control channel dedicated to the terminal device, the first information includes an eighth parameter. Setting the eighth parameter to a first value indicates that a function of the first information is to determine the symbol attribute, and setting the eighth parameter to a second value indicates that a function of the first information is to schedule uplink/downlink data.

In some embodiments, if the first information is in a DCI format for scheduling PDSCH, and the DCI format is scrambled by C-RNTI, and an eighth parameter is a first value, then the DCI format is not used to schedule a PDSCH or is used to schedule a PDSCH without downlink data; or, if the first information is in a DCI format for scheduling PUSCH, and the DCI format is scrambled by C-RNTI, and the eighth parameter is the first value, then the DCI format is not used to schedule a PUSCH or is used to schedule a PUSCH without uplink data.

In some embodiments, the communication node 72 is further configured to send second information to the second node, where the second information is used to indicate that the second node is permitted to modify the symbol attribute.

In some embodiments, the communication node 72 is further configured to receive third information from the second node, where the third information is used to indicate that the second node supports modifying the symbol attribute.

FIG. 8 is another signal transmission apparatus provided in the embodiments of the present disclosure. The signal transmission apparatus is applied to a second node. The signal transmission apparatus 80 includes: a communication module 81 and a processing module 82.

The communication module 81 is configured to receive first information from a first node, where the first information is used to determine a symbol attribute corresponding to a symbol.

The processing module 82 is configured to determine the symbol attribute corresponding to the symbol based on the first information.

In some embodiments, the communication module 81 is configured to receive or transmit a signal to be transmitted on a first transmission resource containing the symbol based on the symbol attribute corresponding to the symbol determined by the first information; the first transmission resource overlaps with a transmission resource of the signal to be transmitted between the first node and the second node, and a transmission direction supported by the first transmission resource conflicts with a transmission direction of the signal to be transmitted.

In some embodiments, the communication module 81 is configured to receive or transmit a signal to be transmitted based on the symbol attribute corresponding to the symbol determined by the first information, where a transmission direction of the signal to be transmitted does not conflict with a symbol attribute corresponding to the symbol determined by the first information.

In some embodiments, the communication module 81 is further configured to receive second information from the first node, where the second information is used to indicate that the second node is permitted to modify the symbol attribute.

In some embodiments, the communication module 81 is further configured to send third information to the first node, where the third information is used to indicate that the second node supports modifying the symbol attribute.

For a detailed description of the first transmission resource, the overlapping between the first transmission resource and the transmission resource of the signal to be transmitted between the first node and the second node, a situation of conflicting between the transmission direction supported by the first transmission resource and the transmission direction of the signal to be transmitted, and the related processing procedures for determining the symbol attribute corresponding to the symbol, reference may be made to the description on a first node side.

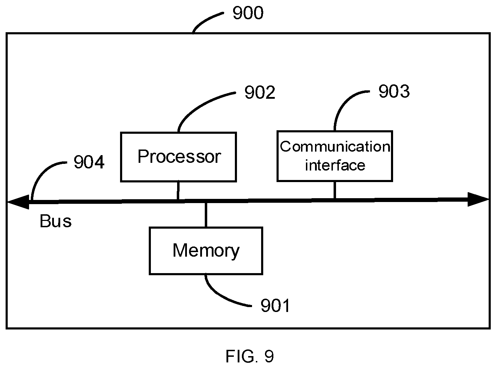

In a case where the functions of the above integrated modules are implemented in the form of hardware, the embodiments of the present disclosure further provide a possible structure of a communication apparatus, and the communication apparatus is configured to perform the signal transmission method provided in the embodiments of the present disclosure. As shown in FIG. 9, the communication apparatus 900 includes a memory 901, a processor 902, a communication interface 903, and a bus 904.

The memory 901 may be a read-only memory (ROM) or other types of static storage devices that may store static information and instructions, a random access memory (RAM), or other types of dynamic storage devices that may store information and instructions, or an electrically erasable programmable read-only memory (EEPROM), a magnetic disk storage medium or any other magnetic storage devices, or any other medium that may be used to carry or store desired program codes with a form of instructions or data and may be accessed by a computer, which is not limited thereto.

The processor 902 may implement or perform various exemplary logical blocks, modules and circuits described in combination with the embodiments of the present disclosure. The processor 902 may be a central processing unit, a general-purpose processor, a digital signal processor, an application specific integrated circuit, a field programmable gate array or other programmable logic devices, a transistor logic device, a hardware component or any combination thereof. The processor 902 may implement or perform various exemplary logical blocks, modules and circuits described in conjunction with the embodiments of the present disclosure. The processor 902 may also be a combination that implements computing functions, for example, including a combination of one or more microprocessors, a combination of a digital signal processor (DSP) and a microprocessor, or the like.

The communication interface 903 is configured to connect with other devices via a communication network. The communication network may be an Ethernet, a wireless access network, a wireless local area network (WLAN), etc.

In some embodiments, the memory 901 may exist independently of the processor 902, and the memory 901 may be connected to the processor 902 via the bus 904 for storing instructions or program codes. The processor 902, when calling and executing the instructions or the program codes stored in the memory 901, is capable of implementing the signal transmission method provided in the embodiments of the present disclosure.

In some embodiments, the memory 901 may also be integrated with the processor 902.

The buse904 may be an extended industry standard architecture (EISA) bus, and the like. Buses 904 may be divided into address buses, data buses, control buses, and the like. For the convenience of representation, only one thick line is used in FIG. 9 for representation, but it does not mean that there is only one bus or one type of bus.

A computer-readable storage medium (e.g., a non-transitory computer-readable storage medium) is provided in some embodiments of the present disclosure, the computer-readable storage medium has stored computer program instructions, and the computer program instructions, upon being executed by a computer, enable the computer to perform the signal transmission method as described in any one of the above embodiments.

In an exemplary implementation, the computer may be the above-mentioned signal transmission apparatus, and the present disclosure does not limit the specific form of the computer.

In some examples, the computer-readable storage medium may include, but is not limited to a magnetic storage device (e.g., a hard disk, a floppy disk or a magnetic tape), an optical disk (e.g., a compact disk (CD) or a digital versatile disk (DVD)), a smart card and a flash memory device (e.g., an erasable programmable read-only memory (EPROM), a card, a stick or a key driver). The various computer-readable storage media described in the present disclosure may represent one or more devices and/or other machine-readable storage media for storing information. The term "machine-readable storage medium" includes, but is not limited to, a wireless channel and various other media capable of storing, containing, and/or carrying instructions and/or data.

A computer program product including instructions is provided in the embodiments of the present disclosure, when the computer program product is run on a computer, the computer is enabled to perform the signal transmission method as described in any one of the above-mentioned embodiments.

The aforementioned descriptions are merely specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A signal transmission method, applied to a first node, wherein the method comprises:
sending first information to a second node, wherein the first information is used to determine a symbol attribute corresponding to a symbol.

2. The method according to claim 1, further comprising:
performing reception or transmission of a signal to be transmitted on a first transmission resource containing the symbol based on the symbol attribute corresponding to the symbol determined by the first information, wherein the first transmission resource overlaps with a transmission resource of the signal to be transmitted, and a transmission direction supported by the first transmission resource conflicts with a transmission direction of the signal to be transmitted.

3. The method according to claim 1, further comprising:
performing reception or transmission of a signal to be transmitted based on the symbol attribute corresponding to the symbol determined by the first information, wherein a transmission direction of the signal to be transmitted does not conflict with the symbol attribute corresponding to the symbol determined by the first information.

4. The method according to claim 1, wherein a signal to be transmitted that are used for reception or transmission on the symbol, comprises at least one of:
physical downlink control channel (PDCCH);
physical downlink shared channel (PDSCH);
synchronization signal and physical broadcast channel block (SSB);
physical random access channel (PRACH);
physical uplink control channel (PUCCH);
downlink reference signal;
physical uplink shared channel (PUSCH); or
uplink reference signal.

5. The method according to claim 1 or 2, wherein the symbol attribute of the symbol includes a first type symbol and a second type symbol; the first type symbol being a symbol configured with a sub band full duplex, and the second type symbol being a symbol that is not configured with the sub band full duplex;
the first type symbol includes at least one of: a first type downlink symbol, or a first type flexible symbol;
the second type symbol includes at least one of: a second type downlink symbol, or a second type flexible symbol.

6. The method according to claim 2, wherein in a case where the transmission direction of the signal to be transmitted is an uplink direction, the first transmission resource comprises at least one of:
a downlink subband on a first type symbol;
a guard interval on the first type symbol; or
a second type symbol.

7. The method according to claim 2, wherein in a case where the transmission direction of the signal to be transmitted is a downlink direction, the first transmission resource comprises at least one of:
an uplink subband on a first type symbol; or
a guard interval on the first type symbol.

8. The method according to claim 1, wherein the first information being used to determine the symbol attribute corresponding to the symbol, comprises any one of:
determining a symbol attribute of a specific symbol;
determining that the symbol attribute of the specific symbol have changed;
determining that a specific first type symbol is modified to a second type symbol; or
determining whether to add or remove k first type symbol, where k is a positive integer.

9. The method according to claim 8, wherein the determining whether to add or remove the k first type symbol, comprises at least one of:
determining to add k first type symbols starting from an ending of existing first type symbol backward;
determining to add k first type symbols starting from a beginning of the existing first type symbol forward;
determining to remove k first type symbols starting from the ending of the existing first type symbol forward; or
determining to remove k first type symbols starting from the beginning of the existing first type symbol backward.

10. The method according to claim 1, wherein the first information includes at least one of following parameters: a first parameter, a second parameter, a third parameter, a fourth parameter, a fifth parameter, a sixth parameter, or a seventh parameter; wherein the first parameter is used to determine a time slot, a time division duplex (TDD) frame structure period, or a symbol configuration period of a sub band full duplex; the second parameter is used to determine a position of a specific symbol; the third parameter is used to determine a symbol attribute of the specific symbol; the fourth parameter is used to indicate a number of first type symbols added; the fifth parameter is used to indicate an addition manner; the sixth parameter is used to indicate a number of first type symbols removed; or the seventh parameter is used to indicate a reduction manner.

11. The method according to claim 1, wherein a validity of a determined symbol attribute satisfies any one of:
the validity of the determined symbol attribute persists until the validity of the symbol attribute is indicated to change again;
the determined symbol attribute is only valid for a current instruction;
the determined symbol attribute is valid within a current TDD frame period;
the determined symbol attribute is valid within a current first type symbol configuration period; or
the determined symbol attribute remains valid for a validity duration further indicated by the first information.

12. The method according to claim 1, wherein determining the symbol attribute corresponding to the symbol, comprises at least one of:
modifying a first type symbol to a second type symbol; or
modifying the second type symbol to the first type symbol.

13. The method according to claim 12, wherein the modifying the first type symbol to the second type symbol, comprises at least one of following constraint conditions:
a first type downlink symbol is only permitted to be modified to a second type downlink symbol;
a first type flexible symbol is only permitted to be modified to the second type downlink symbol, or, the first type flexible symbol is only permitted to be modified to a second type flexible symbol;
second type symbols obtained by modification within a same time slot are consecutive;
within a same time slot, a TDD frame structure period, or a symbol configuration period of a sub band full duplex, a second type downlink symbol obtained by modification is continuous with a second type downlink symbol or a second type flexible symbol configured by an uplink and downlink common configuration signaling; or
within a same time slot, a TDD frame structure period, or a symbol configuration period of the sub band full duplex, a second type flexible symbol obtained by modification is continuous with a second type downlink symbol or a second type flexible symbol configured by an uplink and downlink common configuration signaling.

14. The method according to claim 12, wherein the modifying the second type symbol to the first type symbol, comprises at least one of following constraint conditions:
a second type downlink symbol is only permitted to be modified to a first type downlink symbol;
a second type flexible symbol is only permitted to be modified to a first type flexible symbol;
first type symbols obtained by modification within a same time slot are consecutive;
a first type downlink symbol obtained by modification is continuous with an original first type downlink symbol within a same time slot;
a first type flexible symbol obtained by modification is continuous with an original first type flexible symbol within a same time slot; or
a number of conversion points added within a same time slot, a TDD frame structure period, or a symbol configuration period of a sub band full duplex shall not exceed a preset number; the conversion points include: a conversion point from the first type symbol to the second type symbol, and a conversion point from the second type symbol to the first type symbol.

15. The method according to claim 13 or 14, wherein the constraint conditions are determined in one of following manners:
determined and notified by the first node to the second node;
determined and notified by the second node to the first node;
determined through negotiation between the first node and the second node; or
predefined between the first node and the second node.

16. The method according to claim 1, wherein the first information is in a format of downlink control information.

17. The method according to claim 1, wherein the first information is transmitted via a common physical control channel or via a physical control channel dedicated to a terminal device.

18. The method according to claim 17, wherein in a case where the first information is transmitted via the common physical control channel, the first information in the common physical control channel is scrambled by a predefined radio network temporary identifier (RNTI), wherein the predefined RNTI indicates that a function of the first information is to determine the symbol attribute.

19. The method according to claim 17, wherein in a case where the first information is transmitted via the physical control channel dedicated to the terminal device, the first information includes an eighth parameter, wherein setting the eighth parameter to a first value indicates that a function of the first information is to determine the symbol attribute, and setting the eighth parameter to a second value indicates that a function of the first information is to schedule uplink/downlink data.

20. The method according to claim 1, wherein the first information is in a downlink control information (DCI) format for scheduling a PDSCH, and the DCI format is scrambled by a cell radio network temporary identifier (C-RNTI), and an eighth parameter is a first value, then the DCI format is not used to schedule a PDSCH or is used to schedule a PDSCH without downlink data; or,
the first information is in a DCI format for scheduling a PUSCH, and the DCI format is scrambled by C-RNTI, and the eighth parameter is the first value, then the DCI format is not used to schedule a PUSCH or is used to schedule a PUSCH without uplink data.

21. The method according to claim 1, further comprising:
sending second information to the second node, wherein the second information is used to indicate that the second node is permitted to modify the symbol attribute.

22. The method according to claim 1, further comprising:
receiving third information from the second node, wherein the third information is used to indicate that the second node supports modifying the symbol attribute.

23. A signal transmission method, applied to a second node, wherein the method comprises:
receiving first information from a first node, wherein the first information is used to determine a symbol attribute corresponding to a symbol.

24. The method according to claim 23, further comprising:
performing reception or transmission of a signal to be transmitted on a first transmission resource containing the symbol based on the symbol attribute corresponding to the symbol determined by the first information, wherein the first transmission resource overlaps with a transmission resource of the signal to be transmitted, and a transmission direction supported by the first transmission resource conflicts with a transmission direction of the signal to be transmitted.

25. The method according to claim 23, further comprising:
performing reception or transmission of a signal to be transmitted based on the symbol attribute corresponding to the symbol determined by the first information, wherein a transmission direction of the signal to be transmitted does not conflict with the symbol attribute corresponding to the symbol determined by the first information.

26. The method according to claim 23, wherein a signal to be transmitted that are used for reception or transmission on the symbol, comprises at least one of:
physical downlink control channel (PDCCH);
physical downlink shared channel (PDSCH);
synchronization signal and physical broadcast channel block (SSB);
physical random access channel (PRACH);
physical uplink control channel (PUCCH);
downlink reference signal;
physical uplink shared channel (PUSCH); or
uplink reference signal.

27. The method according to claim 23 or 24, wherein the symbol attribute of the symbol includes a first type symbol and a second type symbol; the first type symbol being a symbol configured with a sub band full duplex, and the second type symbol being a symbol that is not configured with the sub band full duplex;
the first type symbol includes at least one of: a first type downlink symbol, or a first type flexible symbol;
the second type symbol includes at least one of: a second type downlink symbol, or a second type flexible symbol.

28. The method according to claim 24, wherein in a case where the transmission direction of the signal to be transmitted is an uplink direction, the first transmission resource comprises at least one of:
a downlink subband on a first type symbol;
a guard interval on the first type symbol; or
a second type symbol.

29. The method according to claim 24, wherein in a case where the transmission direction of the signal to be transmitted is a downlink direction, the first transmission resource comprises at least one of:
an uplink subband on a first type symbol; or
a guard interval on the first type symbol.

30. The method according to claim 23, wherein the first information being used to determine the symbol attribute corresponding to the symbol, comprises any one of:
determining a symbol attribute of a specific symbol;
determining that the symbol attribute of the specific symbol have changed;
determining that a specific first type symbol is modified to a second type symbol; or
determining whether to add or remove k first type symbol, where k is a positive integer.

31. The method according to claim 30, wherein the determining whether to add or remove the k first type symbol, comprises at least one of:
determining to add k first type symbols starting from an ending of existing first type symbol backward;
determining to add k first type symbols starting from a beginning of the existing first type symbol forward;
determining to remove k first type symbols starting from the ending of the existing first type symbol forward; or
determining to remove k first type symbols starting from the beginning of the existing first type symbol backward.

32. The method according to claim 23, wherein the first information includes at least one of following parameters: a first parameter, a second parameter, a third parameter, a fourth parameter, a fifth parameter, a sixth parameter, or a seventh parameter; wherein the first parameter is used to determine a time slot, a time division duplex (TDD) frame structure period, or a symbol configuration period of a sub band full duplex; the second parameter is used to determine a position of a specific symbol; the third parameter is used to determine a symbol attribute of the specific symbol; the fourth parameter is used to indicate a number of first type symbols added; the fifth parameter is used to indicate an addition manner; the sixth parameter is used to indicate a number of first type symbols removed; or the seventh parameter is used to indicate a reduction manner.

33. The method according to claim 23, wherein a validity of a determined symbol attribute satisfies any one of:
the validity of the determined symbol attribute persists until the validity of the symbol attribute is indicated to change again;
the determined symbol attribute is only valid for a current instruction;
the determined symbol attribute is valid within a current TDD frame period;
the determined symbol attribute is valid within a current first type symbol configuration period; or
the determined symbol attribute remains valid for a validity duration further indicated by the first information.

34. The method according to claim 23, wherein the determining the symbol attribute corresponding to the symbol, comprises at least one of:
modifying a first type symbol to a second type symbol; or
modifying the second type symbol to the first type symbol.

35. The method according to claim 34, wherein the modifying the first type symbol to the second type symbol, comprises at least one of following constraint conditions:
a first type downlink symbol is only permitted to be modified to a second type downlink symbol;
a first type flexible symbol is only permitted to be modified to the second type downlink symbol, or, the first type flexible symbol is only permitted to be modified to a second type flexible symbol;
second type symbols obtained by modification within a same time slot are consecutive;
within a same time slot, a TDD frame structure period, a radio frame, or a symbol configuration period of a sub band full duplex, a second type downlink symbol obtained by modification is continuous with a second type downlink symbol or a second type flexible symbol configured by an uplink and downlink common configuration signaling; or
within a same time slot, a TDD frame structure period, a radio frame, or a symbol configuration period of the sub band full duplex, a second type flexible symbol obtained by modification is continuous with a second type downlink symbol or a second type flexible symbol configured by an uplink and downlink common configuration signaling.

36. The method according to claim 34, wherein the modifying the second type symbol to the first type symbol, comprises at least one of following constraint conditions:
a second type downlink symbol is only permitted to be modified to a first type downlink symbol;
a second type flexible symbol is only permitted to be modified to a first type flexible symbol;
first type symbols obtained by modification within a same time slot are consecutive;
a first type downlink symbol obtained by modification is continuous with an original first type downlink symbol within a same time slot;
a first type flexible symbol obtained by modification is continuous with an original first type flexible symbol within a same time slot; or
a number of conversion points added within a same time slot, a TDD frame structure period, or a configuration period of a sub band full duplex shall not exceed a preset number; the conversion points include: a conversion point from the first type symbol to the second type symbol, and a conversion point from the second type symbol to the first type symbol.

37. The method according to claim 35 or 36, wherein the constraint conditions are determined in one of following manners:
determined and notified by the first node to the second node;
determined and notified by the second node to the first node;
determined through negotiation between the first node and the second node; or
predefined between the first node and the second node.

38. The method according to claim 23, wherein the first information is in a format of downlink control information.

39. The method according to claim 23, wherein the first information is transmitted via a common physical control channel or via a physical control channel dedicated to a terminal device.

40. The method according to claim 39, wherein in a case where the first information is transmitted via the common physical control channel, the first information in the common physical control channel is scrambled by a predefined radio network temporary identifier (RNTI), wherein the predefined RNTI indicates that a function of the first information is to determine the symbol attribute.

41. The method according to claim 39, wherein in a case where the first information is transmitted via the physical control channel dedicated to the terminal device, the first information includes an eighth parameter, wherein setting the eighth parameter to a first value indicates that a function of the first information is to determine the symbol attribute, and setting the eighth parameter to a second value indicates that a function of the first information is to schedule uplink/downlink data.

42. The method according to claim 23, wherein the first information is in a downlink control information (DCI) format for scheduling a PDSCH, and the DCI format is scrambled by a cell radio network temporary identifier (C-RNTI), and an eighth parameter is a first value, then the DCI format is not used to schedule a PDSCH or is used to schedule a PDSCH without downlink data; or,
the first information is in a DCI format for scheduling a PUSCH, and the DCI format is scrambled by C-RNTI, and the eighth parameter is the first value, then the DCI format is not used to schedule a PUSCH or is used to schedule a PUSCH without uplink data.

43. The method according to claim 23, further comprising:
receiving second information from the first node, wherein the second information is used to indicate that the second node is permitted to modify the symbol attribute.

44. The method according to claim 23, further comprising:
sending third information to the first node, wherein the third information is used to indicate that the second node supports modifying the symbol attribute.

45. A communication apparatus, comprising: a memory and a processor, wherein the memory is coupled to the processor; the memory is used to store instructions executable on the processor, the processor, upon executing the instructions, implements the method according to any one of claims 1 to 44.

46. A computer readable storage medium, wherein the computer readable storage medium has stored computer instructions thereon, and the computer instructions, upon being executed on a communication apparatus, enable the communication apparatus to perform the signal transmission method according to any one of claims 1 to 44.
